# FASCICULE DE BREVET EUROPEEN

(11) **EP 0 694 762 B1**
(45) Date de publication et mention de la délivrance du brevet: **23.12.1998**
(21) Numéro de dépôt: 95401348.8
(22) Date de dépôt: 09.06.1995
(51) Int. Cl.: G01C 21/20

(54) **Planche de vol interactive pour la navigation d'un aéronef**
Interaktive Navigationshilfe für ein Flugzeug
Interactive navigational aid for aircraft

(30) Priorité: 27.07.1994 FR 9409285
(43) Date de publication de la demande: 31.01.1996
(73) Titulaire: SEXTANT AVIONIQUE, 92366 Meudon la Forêt Cédex (FR)
(72) Inventeur: Gaultier, Philippe, F-78150 Le Chesnay (FR)
(74) Mandataire: de Saint-Palais, Arnaud Marie

(56) Documents cités:
- EP-A- 0 388 174
- FR-A- 2 637 682
- FR-A- 2 664 379
- GB-A- 2 188 455

## Description

La présente invention concerne un procédé pour la préparation et le contrôle de la navigation d'un aéronef.

Elle a plus particulièrement pour but d'améliorer la sécurité de l'aéronef en réduisant la charge du pilote, en allégeant les opérations à exécuter pour modifier en vol des paramètres de navigation et en éliminant, en grande partie, les risques d'erreur.

D'une manière générale, on sait que l'équipement de base du pilote qui entreprend un voyage à bord d'un aéronef, plus particulièrement du type de ceux utilisés dans l'aviation légère, est la planche de vol. Une telle planche consiste en une petite tablette sur laquelle il est possible de fixer une feuille de papier appelée feuille de navigation ou "log" de navigation. Ce "log" se présente sous la forme d'un tableau dans lequel, avant le vol, le pilote porte les éléments nécessaires au déroulement de sa navigation.

Les premiers éléments à inscrire sont: les points de cheminement jalonnant la route prévue (aérodromes, villes, balises de radionavigation, etc...), et les fréquences liées aux moyens de radiocommunication et de radionavigation disponibles sur la route. Ensuite le pilote doit, à l'aide d'une carte aéronautique et d'instruments de mesure de longueur et d'angle, procéder aux relevés des distances et des caps géographiques entre chacun des points de son parcours.

Pour finir, le pilote calculera les caps magnétiques et les temps estimés entre chaque point et les portera sur sa feuille de navigation.

Juste avant le départ, le pilote calcule l'effet du vent sur les caps et les temps inscrits sur sa feuille et en note le résultat pour chaque segment de vol.

Pendant le déroulement du vol, le pilote qui doit savoir à tout moment où il se trouve, suit sa feuille de route point par point, en chronométrant la durée de chaque segment, en notant les écarts constatés et en calculant de nouveau son estimée de passage au prochain point.

Le document EP 0 388 174 décrit un système d'aide à la navigation comportant un afficheur transparent destiné à se placer sur une carte de navigation, cet afficheur étant destiné à superposer sur la carte des curseurs et des informations relatives à la progression du véhicule par rapport à la carte. Toutefois, ce système ne cherche pas à reproduire et à automatiser la planche de vol que les pilotes ont l'habitude d'utiliser. Par ailleurs ce système ne permet pas d'introduire et d'afficher, point par point, la route prévue par le pilote, et en particulier de montrer à tout instant le segment de route en cours et les informations liées à ce segment de route.

L'invention a pour objet un procédé permettant au pilote de préparer sa navigation sans effectuer les relevés de mesure et les calculs longs et fastidieux précédemment énumérés et de suivre le déroulement de la navigation pendant le vol.

Ce procédé fait intervenir un dispositif comprenant un processeur doté d'une mémoire et de moyens de dialogue homme/machine comprenant un écran de visualisation et un clavier muni de touches.

Il comprend les phases opératoires suivantes :
- la préparation de la route à suivre par l'aérodyne en chargeant en mémoire (37) des informations relatives à une route, ces informations étant préalablement mémorisées sur un support, ou saisies à l'aide des susdites touches, et comprenant des paramètres relatifs aux points de passage jalonnant la route prévue, ainsi qu'aux aides de radionavigation balisant chacun de ces points, les paramètres relatifs aux points et balises étant stockés dans une base de données "Aérodromes et balises" contenue dans la susdite mémoire ;
- la définition des paramètres caractérisant l'environnement dans lequel se déroulera la navigation, ces paramètres pouvant consister en des caractéristiques de l'aérodyne, de son chargement, du sens de la vitesse du vent et du carburant embarqué ; et
- l'affichage, en cours de la navigation, d'au moins un premier couple de points de cheminement comprenant le dernier point par lequel l'aérodyne est passé et le prochain point de passage, du segment reliant ces deux points, ainsi que des informations nécessaires au contrôle de la navigation entre ces points, ces informations pouvant consister en le cap magnétique, la distance, le temps estimé de passage au prochain point avec et sans vent.

Selon l'invention, ce procédé est caractérisé en ce qu'il comprend la mise à jour automatique des informations affichées par l'action sur une touche de fonction au moment du passage de l'aéronef à chaque point de cheminement, cette action provoquant l'effacement à l'écran du point de cheminement qui précède le point saisi et l'affichage d'un nouveau point de cheminement qui succède au dernier point affiché, ainsi que la recherche dans la susdite mémoire, le calcul et l'affichage de nouvelles informations tenant compte de la mise à jour qui vient d'être effectuée.

Avantageusement, le dispositif pour la mise en oeuvre du procédé précédemment décrit pourra se présenter sous la forme d'une planche de vol comportant un boîtier plat logeant les circuits électroniques d'un processeur programmé de manière à exécuter les différentes étapes du procédé, la face supérieure du boîtier étant équipée d'un écran et d'un clavier, et comprenant trois plages successives, à savoir :
- une plage de visualisation équipée de l'écran,
- une première plage de dialogue comprenant un ensemble de touches de fonction, ainsi que des touches de direction, et
- une deuxième plage de dialogue équipée de moyens permettant d'effectuer la saisie d'informations.

Ce dispositif comprend également un volet rigide est monté pivotant autour d'une charnière axée parallèlement à un bord latéral du boîtier, de manière à pouvoir se rabattre sur la seconde plage de dialogue sans recouvrir l'écran et la première plage.

L'alimentation de ce dispositif en énergie électrique peut être assurée au moyen d'une batterie de piles ou d'accumulateurs logée à l'intérieur du boîtier ou grâce à un convertisseur externe pouvant se connecter sur une prise externe prévue sur le boîtier.

Grâce à sa forme, ses dimensions et une ergonomie appropriée, une telle planche de vol est particulièrement adaptée à une utilisation à bord d'un aéronef.

Un exemple de réalisation de la planche de vol interactive est décrit ci-dessous, à titre d'exemple non limitatif, avec référence aux dessins annexés dans lesquels :
Les figures 1 et 2 représentent une vue en perspective de la planche de vol interactive ;
La figure 3 représente une vue de dessus de la planche de vol interactive ;
La figure 4 représente un exemple de synoptique de l'électronique de gestion de la planche de vol interactive ;
Les figures 5 et 6 représentent un exemple d'affichage mis en oeuvre par le procédé selon l'invention.

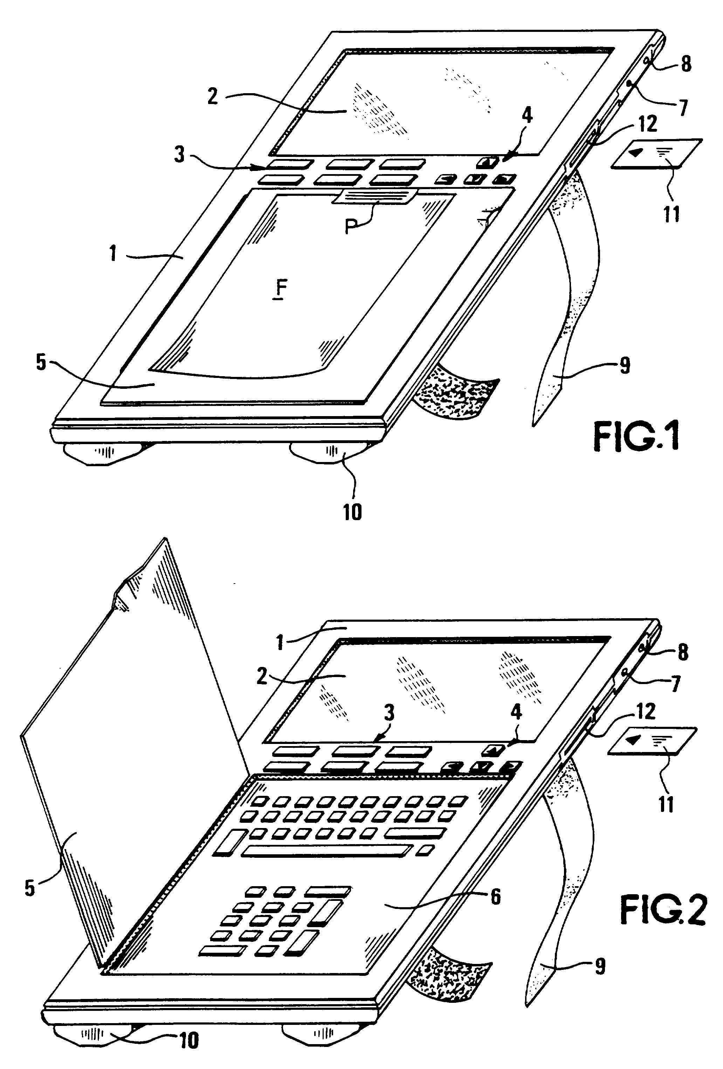

Telle que représentée sur les figures 1 à 3, la planche de vol interactive est composée d'un boîtier plat 1 logeant un processeur et dont la paroi supérieure comprend trois plages successives, à savoir :
- une plage de visualisation équipée d'un écran 2, par exemple de type à cristaux liquides,
- une première plage de dialogue comprenant un ensemble de touches de fonction 3, ici les touches "Départ", "Stop", "Temps", "Position", "Carte", "MENU", ainsi que quatre touches de direction 4 agencées de façon classique,
- une deuxième plage de dialogue équipée de moyens permettant d'effectuer la saisie d'informations, ces moyens consistant ici en un clavier alphanumérique 6.

Un volet rigide 5 est monté pivotant autour d'une charnière axée parallèlement à un bord latéral du boîtier 1, de manière à pouvoir se rabattre sur la seconde plage de dialogue en masquant le clavier 6. Par ailleurs, ce volet est équipé de moyens tels qu'une pince élastique P, permettant la fixation d'une feuille F ou d'un bloc de feuilles de papier, de sorte qu'en position rabattue du volet, la planche peut jouer le rôle d'une planche de bord classique tout en permettant un dialogue avec le processeur, du fait que la plage de visualisation ainsi que la première plage de dialogue demeurent découvertes.

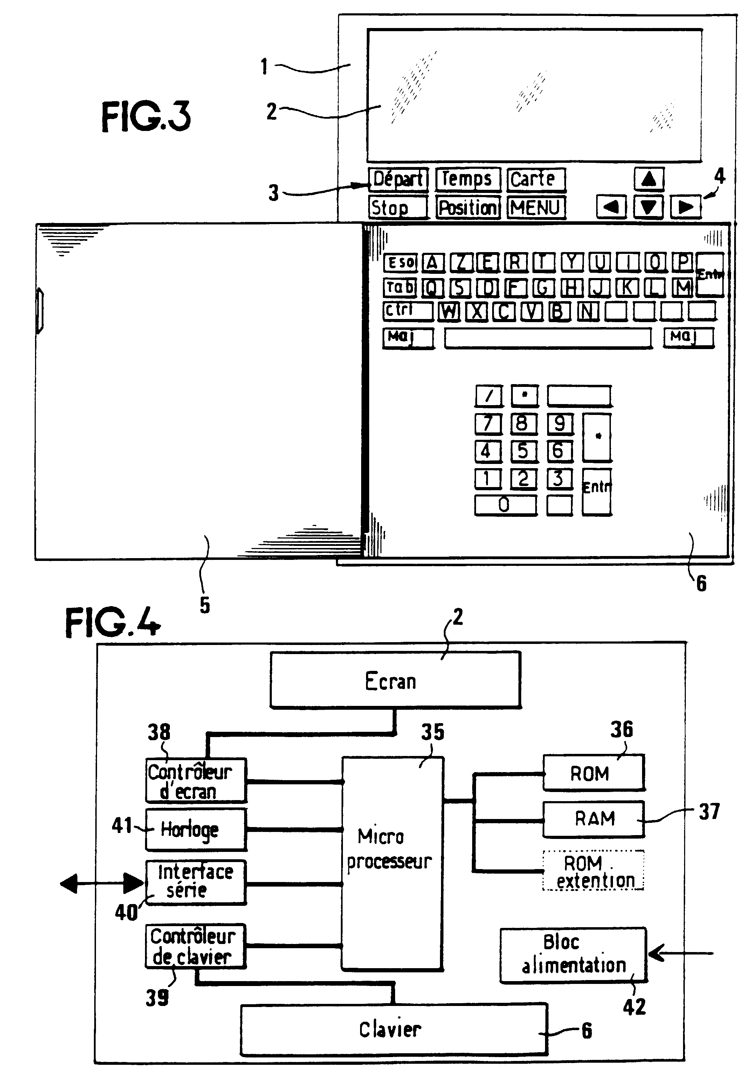

La gestion de la planche de vol se fait par le microprocesseur 35, lequel est associé à des mémoires ROM 36 et RAM 37, un contrôleur d'écran 38, un contrôleur 39 pour les touches du clavier 2 et les touches de la première plage de dialogue, un contrôleur de ligne série 40 et une horloge 41 (figure 4).

L'alimentation électrique du circuit électronique de la planche (bloc 42) est un système autonome utilisant des piles ou des batteries. Une alimentation externe est aussi possible au travers d'un convertisseur de tension optionnel pouvant se brancher sur un connecteur 7 équipant la bordure latérale droite du boîtier 1.

Une connexion à une imprimante ou à un micro-ordinateur est possible en utilisant la liaison série de type RS 232 (interface 40) accessible par un connecteur 8.

Un logement 12 également formé dans la bordure latérale droite permet d'insérer une carte mémoire 11 optionnelle.

La paroi inférieure de la planche de vol interactive est équipée d'une sangle élastique 9 se terminant par des fixations de type VELCRO. Cette sangle permet la fixation de la planche de vol sur la cuisse du pilote, position particulièrement adaptée à la configuration d'un cockpit d'aéronef.

Un bon maintien est assuré par la forme de la paroi inférieure du boîtier qui présente deux protubérances longitudinales 10.

Les dimensions du boîtier peuvent être par exemple les suivantes : 250 mm de long ; 160 mm de large et 15 mm de profondeur.

L'écran de visualisation 2 peut consister en un écran graphique monochrome ou couleur d'environ 480 ∗ 160 points. A titre d'exemple, cet écran est de technologie LCD utilisé en mode réflectif.

Le clavier alphanumérique 6, surtout utilisé pendant la phase de préparation avant le vol, peut être masqué par le volet 5 formant ainsi une tablette permettant de recevoir une feuille de papier pour la prise de note en vol.

Les six touches de fonction 3, ainsi que les quatre touches de direction 4 sont utilisées pendant le vol pour le suivi et le contrôle de la navigation. Elles sont donc toujours accessibles.

En principe, l'électronique de la planche de vol est toujours alimentée. Il est alors possible de passer dans un mode de consommation minimum en pressant simultanément les touches "Départ" et "Stop", ce qui provoque l'extinction de l'écran sans perte d'information. Le retour au mode normal d'utilisation se fait en pressant la touche "Départ".

Le procédé mis en oeuvre selon l'invention offre un ensemble de fonctions accessibles au travers d'un menu présenté sur l'écran de visualisation après une action sur la touche de fonction "MENU". Ces fonctions sont les suivantes :
NAVIGATION/Paramètres : cette fonction permet d'initialiser les paramètres nécessaires au vol : la vitesse propre de l'aéronef, la déclinaison magnétique au départ et à l'arrivée, la vitesse du vent et sa direction, la quantité de carburant embarquée, le chargement ...
NAVIGATION/Préparation : cette fonction permet de rentrer les points jalonnant la route prévue ainsi que les aides de radionavigation pour baliser chacun de ces points. La recherche des points et des balises se fait automatiquement dans une base de données "Aérodromes et balises" contenue dans la mémoire de la planche de vol interactive.
NAVIGATION/Afficher : cette fonction permet d'afficher dans sa totalité le "log" de navigation actif. Les différents points sont affichés, ainsi que les informations suivantes : altitude, code OACI d'identification des aérodromes, fréquences radio, orientation des pistes, etc... Toutes ces informations ayant été recherchées automatiquement dans la base de données "Aérodromes et balises".

Les distances et les temps avec et sans vent, ainsi que les caps sont calculés en fonction des coordonnées géographiques présentes dans la base de données "Aérodromes et balises" puis sont affichés.
NAVIGATION/Modifier : cette fonction permet de modifier le plan de vol en mémoire.
NAVIGATION/Plan : cette fonction permet d'afficher une représentation graphique de l'ensemble de la route prévue.
NAVIGATION/En route : cette fonction permet, pendant le vol, d'utiliser de façon interactive le "log" de navigation actif.

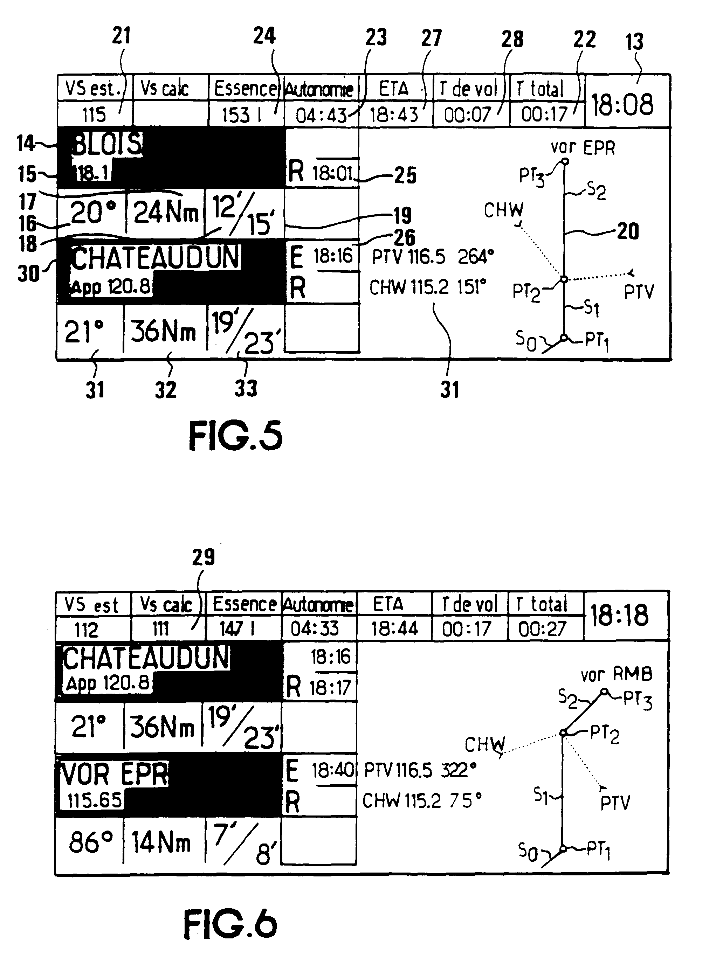

Comme ceci se trouve illustré sur les figures 5 et 6, cette fonction, une fois sélectionnée permet d'afficher l'heure courante 13, les informations sur les deux prochains segments de vol S1, S2 : le nom 14, des premier et deuxième points de cheminement PT1, PT2, les fréquences éventuelles 15, le cap magnétique 16, la distance 17, le temps sans vent 18 et le temps avec vent 19. Un graphique 20 représentant les deux prochains segments de vol S1, S2 et les éventuels radials PTV, CHW balisant le prochain point de cheminement PT2, dans un repère ayant l'axe de l'aéronef comme axe vertical est aussi affiché. L'échelle utilisée pour la représentation graphique est calculée automatiquement pour utiliser toute la place disponible sur l'écran, quelle que soit la longueur des segments de vol S1, S2.

Il est possible de faire défiler l'ensemble du plan de vol en utilisant les touches de direction verticales.

Pour chaque segment de vol S1, S2, la vitesse sol de l'aéronef 29 est calculée en fonction du vent puis est affichée.

A la mise en route du (des) moteur(s) de l'aéronef, une action sur la touche de fonction "Départ" déclenche le chronomètre indiquant la durée totale "moteur" 22. L'autonomie restante 23 ainsi que la quantité d'essence restante, calculées en fonction du carburant embarqué, du type d'aéronef, et du temps écoulé 22, sont alors affichées.

Au passage du premier point PT1, une action sur la touche "Repère" active le suivi automatique du plan de vol. L'heure de passage 25 sur le point PT1 est affichée dans la case correspondante. L'estimée d'arrivée 26 au point de cheminement suivant PT2, l'estimée d'arrivée à la destination finale 27 ainsi que la durée du vol 28 sont affichées. La vitesse sol réelle 29 calculée sur le dernier segment S0 est affichée.

Pour contrôler sa navigation, il suffit donc d'actionner la touche "Repère" au passage de chaque point et de suivre les informations présentées par le "log" électronique.

A tout moment, il est possible de retourner au menu paramètre, y faire des modifications et de revenir au suivi du "log" de navigation.

Le point suivant PT2 sur la route 20 est balisé par un ou deux radials 31, PTV, CHW représentés par le nom de la balise radio, sa fréquence, et le relèvement magnétique de cette balise par rapport audit point PT2.
NAVIGATION/Position : cette fonction permet de localiser l'aéronef en faisant un point à l'aide de relevés de balise de radionavigation (exemple : VOR ou ADF). Il est possible d'appeler directement cette fonction en pressant la touche "Position".

Lorsque cette fonction est appelée à partir de la fonction NAVIGATION/En route, la position de l'aéronef est donnée par défaut par rapport au prochain point sur la route prévue. En d'autres termes, le cap pour rejoindre ce point (bloc 31) et la distance le séparant de l'aéronef (bloc 32) et le temps avec et sans vent (bloc 33), sont affichés. Par ailleurs, une représentation graphique de l'aéronef par rapport à la route prévue est affichée.
FICHIER/Charger : cette fonction permet de choisir un plan de vol parmi l'ensemble des plans de vol en mémoire.
FICHIER/Sauver : cette fonction permet de sauvegarder en mémoire le plan de vol actif.
DONNEES/Ajouter coord : cette fonction permet d'ajouter à la base de données "Aérodromes et balises" des points repérés par leurs coordonnées géographiques (latitude et longitude).
DONNEES/Ajouter radial : cette fonction permet d'ajouter à la base de données "Aérodromes et balises" des points repérés par un radial (relèvement et distance) d'un point quelconque de la base de données.
DONNEES/Ajouter Aéronef : cette fonction permet d'ajouter à la base de données "Aéronefs" un "nouvel aéronef" (paramètres du nouvel aéronef).
DONNEES/Modifier : cette fonction permet de modifier les informations contenues dans les bases de données "Aérodromes et balises" et "Aéronefs".
INFORMATION/Terrain : cette fonction permet d'afficher les informations relatives à un terrain. Le prochain terrain sur la route active est proposé par défaut.
INFORMATION/Aéronef : cette fonction permet d'afficher les informations techniques sur les aéronefs contenus dans la base de données "Aéronefs". L'aéronef sélectionné dans le menu paramètres est proposé par défaut.
MASSE/ : cette fonction permet d'afficher les résultats des calculs de masse et de centrage en fonction des paramètres automatiquement recueillis dans la base de données "Aéronefs" et des informations de chargement rentrées par le pilote.

Une représentation graphique de la masse et du centrage par rapport aux limites de l'aéronef est affichée.

## Revendications

1. Procédé pour la préparation et le contrôle de la navigation d'un aéronef, ce procédé mettant en oeuvre un processeur (35) doté de mémoires (36, 37) et des moyens de dialogue homme/machine comprenant un écran de visualisation (2) et un ensemble de touches (3, 4, 6), ce procédé comportant les phases opératoires suivantes :
- la préparation de la route à suivre par l'aérodyne en chargeant en mémoire (37) des informations relatives à une route, ces informations étant préalablement mémorisées sur un support, ou saisies à l'aide des susdites touches, et comprenant des paramètres relatifs aux points de passage jalonnant la route prévue, ainsi qu'aux aides de radionavigation balisant chacun de ces points, les paramètres relatifs aux points et balises étant stockés dans une base de données "Aérodromes et balises" contenue dans la susdite mémoire ;
- la définition des paramètres caractérisant l'environnement dans lequel se déroulera la navigation, ces paramètres pouvant consister en des caractéristiques de l'aérodyne, de son chargement, du sens de la vitesse du vent et du carburant embarqué ; et
- l'affichage, en cours de la navigation, d'au moins un premier couple de points de cheminement comprenant le dernier point par lequel l'aérodyne est passé et le prochain point de passage, du segment reliant ces deux points, ainsi que des informations nécessaires au contrôle de la navigation entre ces points, ces informations pouvant consister en le cap magnétique, la distance, le temps estimé de passage au prochain point avec et sans vent ;
caractérisé en ce qu'il comprend la mise à jour automatique des informations affichées par l'action sur une touche de fonction au moment du passage de l'aérodyne à chaque point de cheminement (PT1, PT2), cette action provoquant l'effacement à l'écran (2) du point de cheminement qui précède le point (PT1) saisi et l'affichage d'un nouveau point de cheminement (PT3) qui succède le dernier point affiché (PT2), ainsi que la recherche dans la susdite mémoire, le calcul et l'affichage de nouvelles informations tenant compte de la mise à jour qui vient d'être effectuée.

2. Procédé selon la revendication 1,
caractérisé en ce qu'il comprend, en cours de préparation ou de navigation, une phase d'affichage de la totalité du "log" de navigation actif ainsi que d'informations contenues dans une base de données "Aérodromes et balises" telles que l'altitude et le code d'identification des aérodromes, les fréquences radio et l'orientation des pistes, cette phase comprenant le calcul des distances et des temps avec et sans vent.

3. Procédé selon l'une des revendications précédentes,
caractérisé en ce qu'il comprend une phase de modification du plan de vol en cours de navigation.

4. Procédé selon l'une des revendications précédentes,
caractérisé en ce qu'il comprend, en cours de navigation, l'affichage de l'heure courante, des informations sur les deux prochains segments de vol telles que le nom du premier et du deuxième points de passage, les fréquences, le cap magnétique, la distance, le temps sans vent et le temps avec vent, et l'affichage d'un graphique représentant au moins les deux segments de vol (S1, S2) et les deux éventuels radials (PTV, CHW) balisant le prochain point de cheminement, dans un repère ayant l'axe de l'aéronef comme axe vertical.

5. Procédé selon l'une des revendications précédentes,
caractérisé en ce qu'il comprend le comptage du temps s'écoulant à la suite du démarrage du moteur de l'aéronef, ainsi que le calcul et l'affichage de l'autonomie restante ainsi que la quantité d'essence restante, en fonction du carburant embarqué, du type d'aéronef et du temps écoulé.

6. Procédé selon l'une des revendications précédentes,
caractérisé en ce que la susdite mise à jour comprend l'affichage de l'heure de passage sur le point de passage (PT1) qui y a donné lieu, de l'heure estimée d'arrivée au point de cheminement suivant (PT2), de l'heure estimée d'arrivée à la destination finale ainsi que de la durée du vol.

7. Procédé selon la revendication 6,
caractérisé en ce que la susdite mise à jour comprend en outre l'affichage de la vitesse sol réelle calculée sur le dernier segment parcouru (S0).

8. Procédé selon l'une des revendications précédentes,
caractérisé en ce qu'il comprend la localisation de l'aéronef à l'aide de relevés de balise de radionavigation.

9. Dispositif pour le contrôle et la préparation de la navigation d'une aéronef, ce dispositif comportant un boîtier (1) de faible épaisseur, en forme de planche de vol, dont la paroi supérieure est équipée de moyens de dialogue comportant au moins un écran de visualisation (2) et des touches et, à l'intérieur du boîtier, un processeur (35) associé à des mémoires (36, 37), un contrôleur d'écran (38), un contrôleur pour l'ensemble des touches (39), une horloge (41) et, éventuellement, des moyens de connexion d'une carte mémoire, la susdite paroi supérieure comprenant trois plages successives, à savoir :
- une plage de visualisation équipée de l'écran (2),
- une première plage de dialogue comprenant un ensemble de touches de fonction (3), ainsi que des touches de direction (4), et
- une deuxième plage de dialogue équipée de moyens (6) permettant d'effectuer la saisie d'informations,
le processeur étant programmé de manière à effectuer :
- la préparation de la route à suivre par l'aérodyne en chargeant en mémoire (37) des informations relatives à une route, ces informations étant préalablement mémorisées sur un support, ou saisies à l'aide des susdites touches, et comprenant des paramètres relatifs aux points de passage jalonnant la route prévue, ainsi qu'aux aides de radionavigation balisant chacun de ces points, les paramètres relatifs aux points et balises étant stockés dans une base de données "Aérodromes et balises" contenue dans la susdite mémoire ;
- la définition des paramètres caractérisant l'environnement dans lequel se déroulera la navigation, ces paramètres pouvant consister en des caractéristiques de l'aérodyne, de son chargement, du sens de la vitesse du vent et du carburant embarqué ; et
- l'affichage, en cours de la navigation, d'au moins un premier couple de points de cheminement comprenant le dernier point par lequel l'aérodyne est passé et le prochain point de passage, du segment reliant ces deux points, ainsi que des informations nécessaires au contrôle de la navigation entre ces points, ces informations pouvant consister en le cap magnétique, la distance, le temps estimé de passage au prochain point avec et sans vent ;
caractérisé en ce qu'un volet rigide (5) est monté pivotant autour d'une charnière axée parallèlement à un bord latéral du boîtier (1), de manière à pouvoir se rabattre sur la seconde plage de dialogue sans recouvrir le susdit écran (2) et la susdite première plage, et en ce qu'il comprend une touche de fonction permettant de déclencher, au moment du passage de l'aérodyne à chaque point de cheminement (PT1, PT2), une opération de mise à jour automatique des informations affichées par le processeur, cette opération comprenant l'effacement à l'écran (2) du point de cheminement qui précède le point (PT1) saisi et l'affichage d'un nouveau point de cheminement (PT3) qui succède le dernier point affiché (PT2), ainsi que la recherche dans la susdite mémoire, le calcul et l'affichage de nouvelles informations tenant compte de la mise à jour qui vient d'être effectuée.

10. Dispositif selon la revendication 9,
caractérisé en ce que le volet (5) est équipé de moyens (P) permettant la fixation d'une feuille ou d'un bloc de feuilles de papier.

11. Dispositif selon la revendication 9,
caractérisé en ce que la paroi inférieure du boîtier (1) présente deux protubérances longitudinales (10).

12. Dispositif selon l'une des revendications 9 à 11,
caractérisé en ce que la paroi inférieure de la planche de vol est équipée d'une sangle élastique (9) se terminant par des moyens de fixation, cette sangle étant destinée à permettre la fixation de la planche de vol sur la cuisse du pilote.

## Patentansprüche

1. Verfahren zur Vorbereitung und Steuerung der Navigation eines Luftfahrzeugs, wobei das Verfahren mit einem mit Speichern (36, 37) ausgestatteten Prozessor (35) und mit Mitteln zum Dialog Mensch/Maschine arbeitet, die einen Anzeigebildschirm (2) und eine Gruppe von Tasten (3, 4, 6) aufweisen, und die folgenden Betriebsphasen umfaßt:
- Vorbereitung der Route, der das Luftfahrzeug folgen soll, durch Laden der eine Route betreffenden Informationen in einen Speicher (37), wobei diese Informationen zuvor auf einem Speichermedium gespeichert oder mit Hilfe der Tasten eingegeben wurden und Parameter umfassen, die sich auf die Durchgangspunkte, welche die vorgesehene Route markieren, sowie auf die Funknavigationshilfsmittel beziehen, die jeden dieser Punkte befeuern, wobei die auf die Punkte und Funkfeuer bezogenen Parameter in einer Datenbank "Flugplätze und Funkfeuer" gespeichert sind, die in dem Speicher enthalten ist;
- Definition der Parameter, welche die Umgebung kennzeichnen, in der die Navigation ablaufen wird, wobei diese Parameter aus Merkmalen des Luftfahrzeugs, seiner Ladung, der Richtung der Windgeschwindigkeit und des an Bord untergebrachten Treibstoffs bestehen; und
- Anzeige, während der Navigation, wenigstens eines ersten Paares von Orientierungspunkten, das den zuletzt von dem Luftfahrzeug passierten Punkt und den nächsten Durchgangspunkt umfaßt, des diese beiden Punkte verbindenden Abschnittes, sowie der zur Steuerung der Navigation zwischen diesen beiden Punkten erforderlichen Informationen, wobei diese Informationen aus dem magnetischen Kurs, der Entfernung und der geschätzten Flugdauer bis zum nächsten Punkt mit und ohne Wind bestehen können;
dadurch gekennzeichnet, daß es die Aktualisierung der angezeigten Informationen durch Betätigen einer Funktionstaste zum Zeitpunkt des Überfliegens jedes Orientierungspunktes (PT1, PT2) durch das Luftfahrzeug umfaßt, wobei durch dieses Betätigen das Löschen des Orientierungspunktes vor dem eingegebenen Punkt (PT1) vom Bildschirm (2) und die Anzeige eines neuen Orientierungspunktes (PT3), der auf den zuletzt angezeigten Punkt (PT2) folgt, sowie die Speichersuche, Berechnung und Anzeige der neuen Informationen unter Berücksichtigung der gerade erfolgten Aktualisierung ausgeführt wird.

2. Verfahren nach Anspruch 1, dadurch gekennzeichnet, daß es während der Vorbereitung oder der Navigation eine Phase zur Anzeige des gesamten aktiven Navigations-"Logs" sowie der in einer Datenbank "Flugplätze und Funkfeuer" enthaltenen Informationen, wie z. B. der Höhe und des Identifizierungscodes der Flugplätze, der Funkfrequenzen und der Ausrichtung der Start- und Landebahnen, aufweist, wobei diese Phase die Berechnung der Entfernungen und der Zeiten mit und ohne Wind umfaßt.

3. Verfahren nach einem der vorhergehenden Ansprüche, dadurch gekennzeichnet, daß es eine Phase zur Modifikation des Flugplans während der Navigation umfaßt.

4. Verfahren nach einem der vorhergehenden Ansprüche, dadurch gekennzeichnet, daß es während der Navigation die Anzeige der aktuellen Uhrzeit, der Informationen über die nächsten zwei Flugabschnitte, wie z. B. den Namen des ersten und des zweiten Durchgangspunktes, die Frequenzen, den magnetischen Kurs, die Entfernung, die Zeit ohne Wind und die Zeit mit Wind, und die Anzeige einer Grafik umfaßt, die wenigstens die zwei Flugabschnitte (S1, S2) und die zwei möglichen Leitstrahlen (PTV, CHW), die den nächsten Orientierungspunkt befeuern, in einem Orientierungspunkt darstellt, der die Achse des Luftfahrzeugs als vertikale Achse hat.

5. Verfahren nach einem der vorhergehenden Ansprüche, dadurch gekennzeichnet, daß es das Zählen der ab dem Start des Motors des Luftfahrzeugs ablaufenden Zeit sowie die Berechnung und die Anzeige des verbleibenden Aktionsradius sowie der verbleibenden Treibstoffmenge in Abhängigkeit von dem an Bord untergebrachten Treibstoff, der Art des Luftfahrzeugs und der abgelaufenen Zeit umfaßt.

6. Verfahren nach einem der vorhergehenden Ansprüche, dadurch gekennzeichnet, daß die oben erwähnte Aktualisierung die Anzeige des Zeitpunktes bei Überfliegen des Durchgangspunktes (PT1), der diese ausgelöst hat, des geschätzten Zeitpunkts der Ankunft am nächsten Orientierungspunkt (PT2), des geschätzten Zeitpunkts der Ankunft am Endziel sowie der Flugdauer umfaßt.

7. Verfahren nach Anspruch 6, dadurch gekennzeichnet, daß die Aktualisierung ferner die Anzeige der tatsächlichen Geschwindigkeit über Grund umfaßt, die über dem zuletzt überflogenen Abschnitt (S0) berechnet wurde.

8. Verfahren nach einem der vorhergehenden Ansprüche, dadurch gekennzeichnet, daß es die Ortung des Luftfahrzeugs mit Hilfe von Ortungssignalen der Funknavigationsbefeuerung umfaßt.

9. Vorrichtung zur Steuerung und Vorbereitung der Navigation eines Luftfahrzeugs, wobei diese Vorrichtung ein Gehäuse (1) mit geringer Dicke in Form eines Fluginstrumentenbrettes aufweist, dessen obere Wand mit Dialogmitteln ausgestattet ist, die wenigstens einen Anzeigebildschirm (2) und Tasten, und im Inneren des Gehäuses einen Prozessor (35), der Speichern (36, 37) zugeordnet ist, eine Bildschirmsteuerung (38), eine Steuerung für die Gruppe der Tasten (39), eine Uhr (41) und gegebenenfalls Mittel zum Anschluß einer Speicherkarte umfassen, wobei die obere Wand drei aufeinanderfolgende Bereiche aufweist, nämlich:
- einen Anzeigebereich, der mit dem Bildschirm (2) ausgestattet ist,
- einen ersten Dialogbereich, der eine Gruppe von Funktionstasten (3) sowie Richtungstasten (4) aufweist, und
- einen zweiten Dialogbereich, der mit Mitteln (6) ausgestattet ist, welche die Eingabe von Informationen gestatten,
wobei der Prozessor so programmiert ist, daß er folgendes durchführt:
- Vorbereitung der Route, der das Luftfahrzeug folgen soll, durch Laden der eine Route betreffenden Informationen in einen Speicher (37), wobei diese Informationen zuvor auf einem Speichermedium gespeichert oder mit Hilfe der Tasten eingegeben wurden und Parameter umfassen, die sich auf die Durchgangspunkte, welche die vorgesehene Route markieren, sowie auf die Funknavigationshilfsmittel beziehen, die jeden dieser Punkte befeuern, wobei die auf die Punkte und Funkfeuer bezogenen Parameter in einer Datenbank _{"}Flugplätze und Funkfeuer" gespeichert sind, die in dem Speicher enthalten ist;
- Definition der Parameter, welche die Umgebung kennzeichnen, in der die Navigation ablaufen wird, wobei diese Parameter aus Merkmalen des Luftfahrzeugs, seiner Ladung, der Richtung der Windgeschwindigkeit und des an Bord untergebrachten Treibstoffs bestehen; und
- Anzeige, während der Navigation, wenigstens eines ersten Paares von Orientierungspunkten, das den zuletzt von dem Luftfahrzeug passierten Punkt und den nächsten Durchgangspunkt umfaßt, des diese beiden Punkte verbindenden Abschnittes sowie der zur Steuerung der Navigation zwischen diesen beiden Punkten erforderlichen Informationen, wobei diese Informationen aus dem magnetischen Kurs, der Entfernung und der geschätzten Flugdauer bis zum nächsten Punkt mit und ohne Wind bestehen können;
dadurch gekennzeichnet, daß eine starre Klappe (5) um ein parallel zu einer Seitenkante des Gehäuses (1) ausgerichtetes Scharnier derart verschwenkbar montiert ist, daß sie auf den zweiten Dialogbereich heruntergeklappt werden kann, ohne den Bildschirm (2) und den ersten Bereich zuzudecken, und daß die Vorrichtung eine Funktionstaste aufweist, mit der zum Zeitpunkt des Passierens jedes Orientierungspunktes (PT1, PT2) durch das Luftfahrzeug ein Vorgang zur automatischen Aktualisierung der von dem Prozessor angezeigten Informationen ausgelöst werden kann, wobei dieser Vorgang das Löschen des vor dem eingegebenen Punkt (PT1) liegenden Orientierungspunktes und die Anzeige eines neuen, auf den zuletzt angezeigten Punkt (PT2) folgenden Orientierungspunktes (PT3) auf dem Bildschirm (2) sowie die Suche in dem Speicher, die Berechnung und die Anzeige neuer Informationen unter Berücksichtigung der gerade erfolgten Aktualisierung umfaßt.

10. Vorrichtung nach Anspruch 9, dadurch gekennzeichnet, daß die Klappe (5) mit Mitteln (P) ausgestattet ist, welche die Befestigung eines Blattes oder eines Schreibblocks ermöglichen.

11. Vorrichtung nach Anspruch 9, dadurch gekennzeichnet, daß die untere Wand des Gehäuses (1) zwei Längsvorsprünge (10) aufweist.

12. Vorrichtung nach einem der Ansprüche 9 bis 11, dadurch gekennzeichnet, daß die untere Wand des Fluginstrumentenbrettes mit einem elastischen Gurt (9) ausgestattet ist, der in Befestigungsmitteln ausläuft, wobei der Gurt dazu vorgesehen ist, die Befestigung des Fluginstrumentenbrettes auf dem Oberschenkel des Piloten zu ermöglichen.

## Claims

1. A method for preparing and controlling navigation of an aircraft, said method using a processor (35) equipped with memories (36,37) and a man/machine dialogue means that comprises a viewing screen (2) and a set of keys (3, 4, 5), said method comprising the following operational phases:
- the preparing of the route to be followed by the aerodyne by loading in the memory (37) information relating to a route, said information having been previously memorized on a medium, or being keyed by means of said keys, and comprising the parameters relating to the passage points marking out the planned route, as well as to the radio navigation aids marking each of these points, the parameters relating to the points and markers being stored in a database "aerodromes and markers" contained in said memory ;
- the defining of the parameters characterizing the environment in which the navigation will take place (these parameters may consist of features of the aircraft, its load, wind speed and direction, and fuel taken on board); and
- the displaying, during navigation, of at least a first couple of way points comprising the last point through which the aircraft has passed and the next way point of the segment linking these two points together, as well as information required to control navigation between these points (this information may consist of the magnetic heading, distance, estimated time of passage at the next point with and without wind);
characterized in that said method comprises the automatic updating of the displayed information by action on a function key as the aircraft passes over each way point (PT1, PT2), said action causing the erasing from said screen (2) of the way point preceding the point (PT1) entered and the displaying of a new way point (PT3) following the previous displayed point (PT2), as well as a search in said memory, and the computing and displaying of new information taking into account the updating that has just been performed.

2. The method as claimed in claim 1, characterized in that it comprises, during preparation or navigation, a phase displaying the entire active navigation log as well as information contained in an "Aerodromes and beacons" database such as altitude, aerodrome identification codes, radio frequencies and the orientation of runways, this phase comprising the calculation of the distances and times with and without wind.

3. The method as claimed in the preceding claims, characterized in that it comprises an in-flight flight plan modification phase.

4. The method as claimed in one of the preceding claims, characterized in that it comprises, during navigation, the displaying of current time, the information on the next two flight segments such as the names of the first and second way points, the frequencies, magnetic heading, distance, time without wind and time with wind, and the displaying of a graphic representing at least the two flight segments (S1, S2) and two possible radials (PTV. CHW) marking the next way point, on a fix having the axis of said aircraft as vertical axis.

5. The method as claimed in one of the preceding claims, characterized in that it comprises the counting of the time lapsing from the starting up of the engine of the aircraft, and the calculating and displaying of the remaining range and remaining amount of fuel as a function of the fuel taken on board, the type of aircraft and the amount of time lapsed.

6. The method as claimed in one of the preceding claims, characterized in that said updating comprises the displaying of the time of passage over the way point (PT1) having given rise to it, of the estimated time of arrival at the next way point (PT2), of the estimated time of arrival at the final destination and of the duration of the flight.

7. The method as claimed in claim 6, characterized in that said updating further comprises the displaying of the real ground speed computed for the last segment (S0) traveled.

8. The method as claimed in one of the preceding claims, characterized in that it comprises the locating of the aircraft by means of radio navigation beacons.

9. A device for preparing and controlling the navigation of an aircraft, said device comprising a case (1) of small thickness, in the shape of a flight instrument panel and of which the upper wall is equipped with a dialogue means comprising at least a viewing screen (2) and keys and, inside said case, a processor (35) associated with memories (36, 37), a screen controller (38), a controller for all the keys (39), a clock (41), and possibly a means for connecting a memory board, said upper wall comprising three successive zones, i.e.
- a viewing zone equipped with said screen (2),
- a first dialogue zone comprising a set of function keys (3) as well as directional keys (4), and
- a second dialogue zone equipped with a means (6) enabling information to be entered,
the processor being programmed so as to execute :
- the preparing of the route to be followed by the aerodyne by loading in the memory (37) information relating to a route, said information having been previously memorized on a medium, or being keyed by means of said keys, and comprising the parameters relating to the passage points marking out the planned route as well as to the radio navigation aids marking each of these points, the parameters relating to the points and markers being stored in a database "adrodromes and markers" contained in said memory ;
- the defining of the parameters characterizing the environment in which the navigation will take place (these parameters may consist of features of the aircraft, its load, wind speed and direction, and fuel taken on board) ; and
- the displaying, during navigation, of at least a first couple of way points comprising the last point through which the aircraft has passed and the next way point of the segment linking these two points together, as well as information required to control navigation between these points (this information may consist of the magnetic heading, distance, estimated time of passage at the next point with and without wind) ;
characterized in that a rigid flap (5) is mounted pivotally about a hinge oriented parallel to a lateral edge of the case (1) so as to be susceptible of folding over the second dialogue zone without covering up said screen (2) and said first zone, and in that it comprises a function key for starting an automatic updating operation of the information displayed by the processor as the aircraft passes over each way point (PT1, PT2), said action causing the erasing from said screen (2) of the way point preceding the point (PT1) entered and the displaying of a new way point (PT3) following the previously displayed point (PT2), as well as a search in said memory, and the computing and displaying of new information taking into account the updating which has just been performed.

10. The device as claimed in claim 9, characterized in that said flap (5) is equipped with a means (P) enabling a sheet or block of sheets of paper to be secured.

11. The device as claimed in claim 9, characterized in that the lower wall of said case (1) comprises two longitudinal protuberances (10).

12. The device as claimed in one of claims 9 to 11, characterized in that said lower wall of said flight instrument panel is equipped with an elastic strap (9) ended by a securing means, said strap being intended to enable said flight instrument panel to be secured to the pilot's thigh.
